# DEMANDE DE BREVET EUROPEEN

(11) **EP 1 533 555 A1**
(43) Date de publication de la demande: **25.05.2005**
(21) Numéro de dépôt: 04356178.6
(22) Date de dépôt: 09.11.2004
(51) Int. Cl.: F16L 13/14

(54) **Raccord à sertissage de tubes conducteurs électriquement**

(30) Priorité: 18.11.2003 FR 0313485
(71) Demandeur: COMAP, 69008 Lyon (FR)
(72) Inventeur: Tuffe, Stéphane, 73160 Cognin (FR)
(74) Mandataire: Maureau, Philippe

(57) **Abrégé**

Raccord (2) à sertir à corps conducteur électriquement destiné au raccordement de tubes (3) conducteurs électriquement, comportant au moins un orifice d'introduction (4) d'un tube (3) muni d'une butée (13), caractérisé en ce qu'au moins un élément électriquement isolant (14, 18, 24, 27, 32) est logé dans l'orifice d'introduction (4) du tube (3), le ou les élément(s) isolant(s) (14, 18, 24, 27, 32) permettant de prévenir tout contact direct entre le tube (3) et le raccord (2) avant sertissage, le sertissage permettant d'établir un contact entre le tube (3) et le raccord (2), un élément isolant (14, 27, 32) étant disposé au contact de l'extrémité du tube avant sertissage et évitant un contact axial entre l'extrémité du tube (3) et la butée (13) de l'orifice d'introduction (4) du raccord (2).

## Description

La présente invention concerne un raccord à sertir pour tubes ainsi qu'un procédé de vérification de bon sertissage.

Lors de l'installation d'une portion de réseau de tubes notamment métalliques, l'installateur réalise un assemblage comprenant notamment des tubes et des raccords avec plusieurs phases d'emboîtement d'un tube et d'un raccord, puis une phase de sertissage au cours de laquelle le raccord est serti sur l'extrémité du tube pour garantir la tenue mécanique durable de l'installation et son étanchéité.

Afin de garantir l'étanchéité durable de l'installation, il est nécessaire de sertir tous les raccords. Diverses solutions ont été envisagées pour permettre à l'utilisateur de vérifier que tous les raccords ont été sertis. Des dispositifs de marquage sont utilisés, mais ceux-ci nécessitent une vérification individuelle de chaque raccord.

Une autre possibilité est la création d'une fuite provoquée au niveau du raccord tant que celui-ci n'est pas serti. Cette approche permet à l'opérateur de détecter les raccords non sertis en mettant l'installation sous pression, soit visuellement en repérant les fuites, soit en constatant une pression plus faible que la pression normale dans l'installation, ce qui permet une vérification globale du sertissage des raccords de l'installation. Ces fuites peuvent être provoquées par des joints de forme spécifiques, ce qui implique une fabrication coûteuse et peut impliquer un positionnement particulier du joint dans une gorge prévue à cet effet. Les fuites peuvent également être provoquées par la forme du raccord, permettant ainsi d'utiliser des joints communs toriques de section constante.

En particulier, les documents DE 101 18 995 et WO 01/63160 décrivent deux dispositifs permettant de réaliser de telles fuites provoquées avant sertissage.

L'ensemble des solutions décrites précédemment implique soit un examen individuel de chaque raccord, soit une mise sous pression de l'installation, du liquide pouvant fuir à l'extérieur, ce qui n'est pas souhaitable dans tous les environnements.

La présente invention permet de remédier à ces problèmes techniques dans le cas de raccord à corps conducteur électriquement et de tubes également conducteurs en proposant une solution qui permet de réaliser des vérifications pour un ensemble de raccordement et sans causer de fuite de liquide.

A cet effet, la présente invention a pour objet un raccord à sertir à corps conducteur électriquement destiné au raccordement de tubes conducteurs électriquement, comportant au moins un orifice d'introduction d'un tube muni d'une butée, caractérisé en ce qu'au moins un élément électriquement isolant est logé dans l'orifice d'introduction du tube, le ou les élément(s) isolant(s) permettant de prévenir tout contact direct entre le tube et le raccord avant sertissage, le sertissage permettant d'établir un contact entre le tube et le raccord, un élément isolant étant disposé au contact de l'extrémité du tube avant sertissage et évitant un contact axial entre l'extrémité du tube et la butée de l'orifice d'introduction du raccord.

Cette disposition d'éléments isolants dans l'orifice d'introduction du raccord permet de garantir l'absence de contact électrique entre le tube et le raccord avant sertissage, et un contact après sertissage. Ainsi, il est possible à l'installateur de mesurer la conductivité électrique et de déterminer si le sertissage a été effectué ou non, sans mettre l'installation sous pression et sans avoir à effectuer de vérification individuelle de chaque raccord, la conductivité pouvant être mesurée sur plusieurs raccordements à la fois.

Avantageusement, au moins un des éléments isolants présente une portion tronconique dont le diamètre diminue dans le sens d'introduction du tube.

Cette disposition facilite l'introduction du tube en permettant le centrage de l'extrémité de celui-ci dans l'orifice d'introduction et d'éviter le blocage contre une butée avant introduction complète.

Avantageusement, le raccord est équipé d'au moins deux éléments isolants.

Selon un mode de réalisation, au moins l'un des éléments isolant est constitué par un joint d'étanchéité.

Il est nécessaire, notamment pour les tubes métalliques, d'utiliser des joints pour garantir l'étanchéité de l'installation. Ces joints sont en général réalisés en matériau isolant. Ils peuvent donc constituer des éléments isolants.

Avantageusement, le raccord est équipé d'au moins trois éléments isolants, un des éléments isolants étant situé entre le joint d'étanchéité et l'extrémité d'introduction du tube.

Si les joints constituent des éléments isolants, certains d'entre eux ne possèdent pas une tenue mécanique permettant de garantir l'absence de contact entre le tube et le raccord. Dans ce cas, il est possible d'ajouter entre le joint et l'extrémité d'introduction un autre élément isolant.

Selon un mode de réalisation, au moins un des éléments d'isolation est mobile dans l'orifice d'introduction, cet élément étant mis en position par l'introduction du tube.

Avantageusement, un élément isolant mobile comporte un rebord de protection permettant de protéger le joint d'étanchéité lors de l'introduction du tube dans l'orifice.

Certains tubes présentent une extrémité comportant des aspérités susceptibles d'endommager le joint, le bord de protection permet d'éviter le contact avec celui-ci. L'élément isolant étant par la suite poussé dans l'orifice d'introduction par le tube, le joint vient au contact de la paroi latérale lisse du tube pour assurer l'étanchéité.

Selon un mode de réalisation, les éléments isolants sont de forme annulaire.

Avantageusement, au moins une gorge est ménagée dans la paroi de l'orifice d'introduction pour loger au moins un élément isolant.

L'invention a également pour objet un procédé de vérification du bon sertissage, comportant les étapes consistant à mesurer la conductivité électrique entre deux points délimitant une portion d'une installation comportant des tubes et des raccords conducteurs tels que décrits ci-dessus, et à :
- conclure à un bon sertissage sur cette portion si la conductivité est présente, ou
- recommencer la mesure sur des sous portions de la portion précédente en absence de conductivité entre ces deux points, jusqu' à une portion ne contenant qu'un seul raccord non serti, les raccords non sertis étant ainsi isolés.

L'invention sera mieux comprise à l'aide de la description qui suit, en référence au dessin schématique annexé représentant plusieurs formes d'exécution de ce raccord.

Figure 1 en est une vue en coupe partielle selon un premier mode de réalisation avant sertissage.

Figure 2 est une vue en coupe partielle du raccord de figure 1 après sertissage.

Figure 3 en est une vue en coupe partielle selon un second mode de réalisation avant sertissage.

Figure 4 est une vue en coupe partielle du raccord de figure 3 après sertissage.

Figure 5 en est une vue en demi-coupe partielle selon un troisième mode de réalisation avant sertissage.

Figure 6 est une vue en demi-coupe partielle du raccord de figure 5 avant sertissage et après introduction complète du tube.

Figure 7 en est une vue en coupe partielle selon un quatrième mode de réalisation avant sertissage.

Figure 8 est une vue en demi-coupe partielle du raccord de figure 7 avant sertissage et après introduction complète du tube.

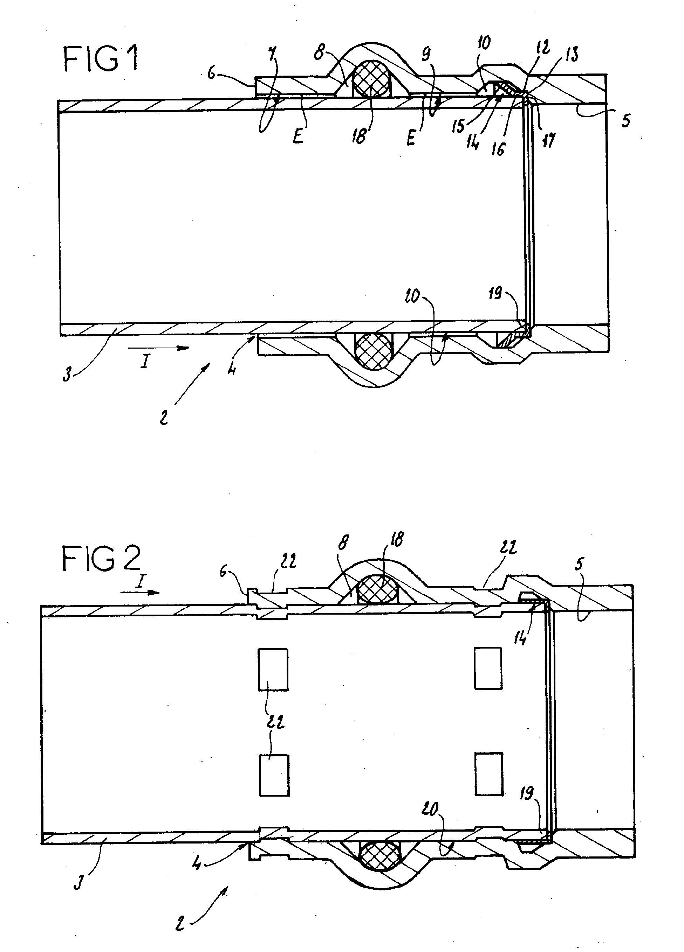

Les figures 1 et 2 représentent l'orifice d'introduction 4 d'un tube 3 d'un raccord 2 selon un premier mode de réalisation. Le tube est introduit dans le sens d'introduction représenté par la flèche I.

Le corps du raccord 2 ainsi que le tube 3 sont réalisés en matériau conducteur, en particulier du cuivre, du laiton ou du bronze.

L'orifice 4 présente une paroi intérieure 5 qui comporte, depuis l'extrémité d'introduction 6 d'un tube vers l'intérieur, dans le sens d'introduction I :
- une première partie tubulaire 7 s'étendant depuis l'extrémité d'introduction 6.
- une première gorge 8 constituée par un bourrelet ménagé vers l'extérieur dans la portion tubulaire 4,
- une seconde portion tubulaire 9,
- une seconde gorge 10, à fond plat, constituée par un bourrelet ménagé vers l'extérieur dans la portion tubulaire 4,
- une troisième portion tubulaire 12,
- un épaulement 13 constituant une butée, le diamètre interne de la portion tubulaire 4 diminuant après l'épaulement 13.

Dans l'orifice d'introduction 4 est logé une bague isolante d'extrémité 14 comportant, dans le sens d'introduction I :
- une première portion tronconique 15, dont le diamètre diminue jusqu'à une valeur sensiblement égale au diamètre extérieur du tube 3, dans le sens d'introduction I,
- une seconde portion tubulaire 16 dont le diamètre intérieur est sensiblement égal au diamètre extérieur du tube 3 et le diamètre extérieur est sensiblement égal au diamètre de la paroi intérieure de l'orifice 4 avant l'épaulement 13, dans le sens d'introduction I, et
- une troisième portion annulaire radiale 17 dont le diamètre intérieur est inférieur au diamètre extérieur du tube 3 et le diamètre extérieur est sensiblement égal à celui de la seconde portion tubulaire 16.

La bague 14 est logée dans l'orifice 4 de façon à ce que :
- la troisième portion annulaire radiale 17 soit en butée contre l'épaulement 13 de l'orifice d'introduction 4,
- la seconde portion tubulaire 16 soit en regard de la troisième portion tubulaire 12 de l'orifice 4, et
- la première portion tronconique 15 soit logée dans la seconde gorge 10 de la paroi de l'orifice 4.

Dans la première gorge 8 de l'orifice 4 est logé un joint d'étanchéité 18 en matériau isolant, ce joint étant de diamètre suffisant pour dépasser de la gorge avant sertissage.

Lors de l'introduction du tube 3, avant sertissage, celui-ci est en contact :
- axialement par son extrémité 19 avec la troisième portion annulaire 17 de la bague d'extrémité 14, qui le sépare de l'épaulement 13,
- radialement, par sa paroi extérieure 20, avec d'une part la seconde portion tubulaire 16 de la bague d'extrémité 14 et d'autre part le joint d'étanchéité 18.

Ainsi, avant sertissage, il n'existe aucun contact entre le tube 3 et le raccord 2, des espaces E étant ménagés entre la paroi extérieure 20 du tube 3 et les premières et secondes portions tubulaires 7, 9 de la paroi intérieure 5 de l'orifice 4 par la présence de la bague isolante d'extrémité 14 et du joint 18.

En revanche, après sertissage, comme illustré sur la figure 2, un contact est réalisé, notamment au niveau des première et seconde portions tubulaires 7, 9 de la paroi de l'orifice 4 du raccord, ces emplacements correspondants aux espaces E avant sertissage. Ce contact peut être renforcé par des zones d'enfoncement 22 imprimées par l'outil de sertissage.

La première portion tronconique 15 de la bague 14 assure le centrage de l'extrémité 19 du tube 3 lors de son introduction et évite le blocage de celle-ci avant d'atteindre la butée sur la troisième portion annulaire 17 de la bague 14.

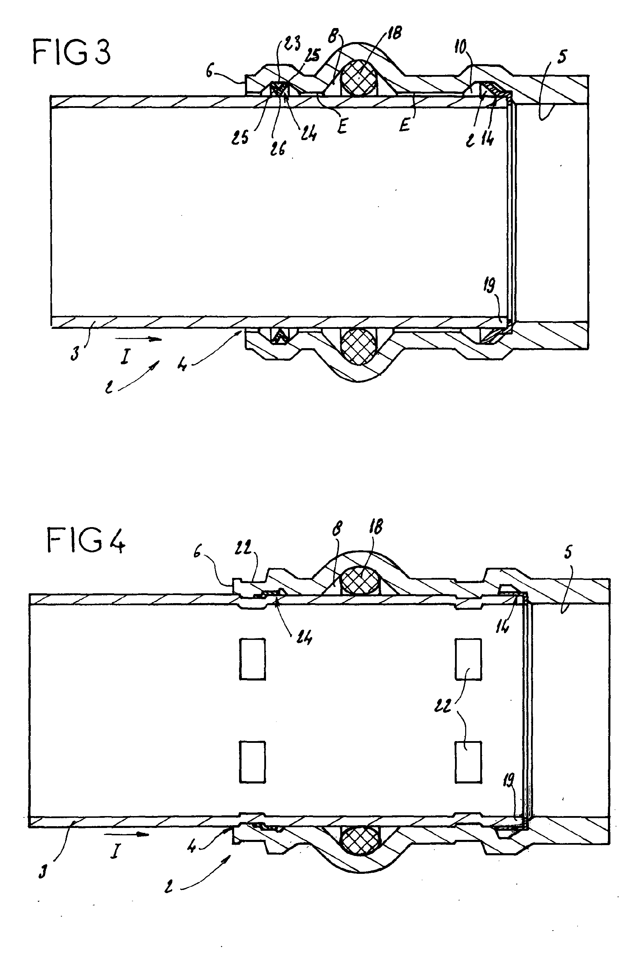

Selon un second mode de réalisation, représenté sur les figures 3 et 4, le raccord 2 comporte les mêmes éléments. En plus de ceux-ci, une troisième gorge 23 à fond plat est ménagée dans l'orifice d'introduction 4, au niveau de la première portion tubulaire 7. Cette troisième gorge 23 constitue un logement pour une seconde bague isolante 24. Cette bague isolante possède une section en V, dont les deux branches 25 prennent appui sur le fond de la gorge 23, et dont le sommet 26 est destiné à prendre appui radialement sur la paroi extérieure 20 du tube 3.

Cette disposition avantageuse permet d'assurer l'absence de contact, avant sertissage, entre le tube et le corps métallique du raccord avec plus de sûreté en fournissant un second élément d'appui plus rigide que le joint d'étanchéité 18.

Après sertissage, le contact est assuré comme décrit pour le premier mode de réalisation.

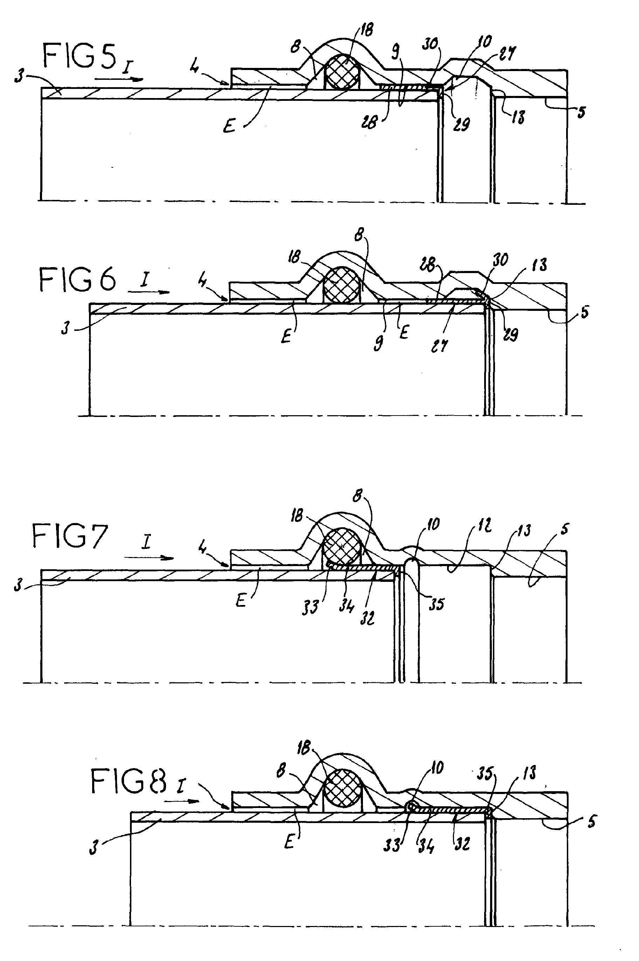

Selon un troisième mode de réalisation représenté sur les figures 5 et 6, la paroi intérieure 5 de l'orifice d'introduction 4 est similaire au premier mode de réalisation, la seconde gorge 10 étant toutefois directement adjacente à l'épaulement 13, sans portion tubulaire intermédiaire. De la même façon que dans le premier mode de réalisation, un joint d'étanchéité 18 est logé dans la seconde gorge 10.

Une bague isolante d'extrémité 27 mobile est logée dans l'orifice 4, au niveau de la seconde portion tubulaire de la paroi intérieure 5 de l'orifice 4, avant introduction du tube 3.

Cette bague mobile 27 comporte, dans le sens d'introduction I :
- une première portion tubulaire 28 dont le diamètre intérieur est sensiblement égal au diamètre extérieur du tube 3 et le diamètre extérieur est sensiblement égal au diamètre de la paroi intérieure de l'orifice 4 avant l'épaulement 13, dans le sens d'introduction I, et
- une seconde portion annulaire radiale 29 dont le diamètre intérieur est inférieur au diamètre extérieur du tube 3 et le diamètre extérieur est égal à celui de la première portion tubulaire 28, et,
- une collerette 30, s'étendant vers l'extérieur à partir de la jonction entre la première portion tubulaire 28 et la seconde portion annulaire radiale 29.

Avant l'introduction du tube 3, lorsque la bague 27 est positionnée au niveau de la seconde portion tubulaire de la paroi intérieure 5 de l'orifice 4, la collerette est repliée entre la première portion tubulaire 28 et la paroi 5 de l'orifice 4

Lors de l'introduction du tube 3, l'extrémité 19 de celui-ci vient au contact de la seconde portion annulaire radiale 29, la bague isolante 27 étant alors poussée jusqu'à venir en butée contre l'épaulement 13. Dans cette position, la collerette 30 se déploie dans la seconde gorge 10.

Cette disposition permet de garantir que la bague isolante 27 ne sorte pas de l'orifice 4.

Avant sertissage, il n'existe aucun contact entre le tube 3 et le raccord 2.

Après sertissage, le contact est établi de façon similaire aux deux premiers modes de réalisation.

Selon une variante de ce quatrième mode de réalisation, le joint d'étanchéité 18 est supprimé, ainsi que la gorge 8 permettant de loger ce joint. Dans ce cas l'étanchéité est assurée par la bague 27, qui est à la fois élément isolant unique et élément d'étanchéité.

Selon un quatrième mode de réalisation, représenté sur les figures 7 et 8, la paroi intérieure 5 de l'orifice 4 est similaire à celle du premier mode de réalisation. Dans ce mode de réalisation, la seconde gorge 10 est de taille réduite et la troisième portion tubulaire 12 de taille plus importante que dans le premier mode de réalisation.

Comme dans le premier mode de réalisation, un joint d'étanchéité 18 est logé dans la première gorge 8.

Dans ce mode de réalisation, une bague isolante, mobile et de protection 32 est disposée, avant introduction du tube, au niveau de la première gorge 8 et de la seconde portion tubulaire 9 de la paroi intérieure 5 de l'orifice 4.

Cette bague mobile et de protection 32 comporte, dans le sens d'introduction I :
- un rebord de protection 33, de forme tronconique et dont le diamètre diminue jusqu'à une valeur sensiblement égale au diamètre extérieur du tube 3, dans le sens d'introduction I,
- une première portion tubulaire 34 dont le diamètre intérieur est sensiblement égal au diamètre extérieur du tube 3 et le diamètre extérieur est sensiblement égal au diamètre de la paroi intérieure de l'orifice 4 avant l'épaulement 13, dans le sens d'introduction I, et
- une seconde portion annulaire radiale 33 dont le diamètre intérieur est inférieur au diamètre extérieur du tube 3 et le diamètre extérieur est égal à celui de la première portion tubulaire 34.

Avant l'introduction du tube 3, la bague 32 est positionnée de la façon suivante :
- le rebord de protection 33 est positionné au niveau de la première gorge 8, de façon à ce que sa face extérieure prenne appui sur le joint 18,
- la première portion tubulaire 34 est positionnée en regard de la seconde portion tubulaire 9 de la paroi intérieure 5 de l'orifice 4.

Lors de l'introduction du tube 3, l'extrémité 19 de celui-ci vient au contact de la seconde portion annulaire radiale 35, la bague isolante 32 étant alors poussée jusqu'à venir en butée contre l'épaulement 13. Dans cette position, le rebord de protection 33 est logé dans la seconde gorge 10.

Cette disposition permet de protéger le joint d'étanchéité 18 lors de l'introduction du tube 3, l'extrémité 19 d'un tube 3 présentant des aspérités susceptibles d'endommager le joint 18 ne pouvant entrer en contact avec celui-ci du fait de la présence du rebord de protection 33.

En utilisant des raccords et des tubes tels que décrits dans les modes de réalisation ci-dessus, il est possible pour un installateur de vérifier le bon sertissage d'un ensemble de raccords et de tubes en mesurant la conductivité électrique sur une portion de l'installation contenant des raccords et des tubes, à l'aide par exemple, d'un ohmmètre connu par ailleurs.

Si entre deux points de l'installation testée formant une portion, il y a conductivité électrique, le sertissage des raccords présents entre les deux points a été effectué. Dans le cas contraire, un ou plusieurs raccords n'ont pas été sertis. Il est alors possible de vérifier pour des fractions de la portion de l'installation testée.

L'invention ne se limite pas aux formes d'exécution décrites, elle en embrasse au contraire toutes les variantes. C'est ainsi notamment que le nombre et la forme des éléments isolants peut varier.

## Revendications

1. Raccord (2) à sertir à corps conducteur électriquement destiné au raccordement de tubes (3) conducteurs électriquement, comportant au moins un orifice d'introduction (4) d'un tube (3) muni d'une butée (13), **caractérisé en ce qu'**au moins un élément électriquement isolant (14, 18, 24, 27, 32) est logé dans l'orifice d'introduction (4) du tube (3), le ou les élément(s) isolant(s) (14, 18, 24, 27, 32) permettant de prévenir tout contact direct entre le tube (3) et le raccord (2) avant sertissage, le sertissage permettant d'établir un contact entre le tube (3) et le raccord (2), un élément isolant (14, 27, 32) étant disposé au contact de l'extrémité du tube avant sertissage et évitant un contact axial entre l'extrémité du tube (3) et la butée (13) de l'orifice d'introduction (4) du raccord (2).

2. Raccord (2) selon la revendication 1, **caractérisé en ce qu'**au moins un des éléments isolants (14,27,32) présente une portion tronconique (15, 30) dont le diamètre diminue dans le sens d'introduction (I) du tube.

3. Raccord (2) selon l'une des revendications 1 et 2, **caractérisé en ce qu'**il est équipé d'au moins deux éléments isolants (14, 18, 24).

4. Raccord (2) selon l'une des revendications 1 à 3, **caractérisé en ce qu'**au moins l'un des éléments isolant est constitué par un joint d'étanchéité (18).

5. Raccord (2) selon la revendication 4, **caractérisé en ce que** le raccord (2) est équipé d'au moins trois éléments isolants (14, 18, 24), un des éléments isolants (24) étant situé entre le joint d'étanchéité (18) et l'extrémité d'introduction (6) du tube (3).

6. Raccord (2) selon l'une des revendications 1 à 5, **caractérisé en ce qu'**au moins un des éléments d'isolation (27, 32) est mobile dans l'orifice d'introduction (4), cet élément étant mis en position par l'introduction du tube (3).

7. Raccord (2) selon la revendication 6, **caractérisé en ce qu'**un élément isolant (32) mobile comporte un rebord de protection (33) permettant de protéger le joint d'étanchéité (18) lors de l'introduction du tube (3) dans l'orifice (4).

8. Raccord (2) selon l'une des revendications 1 à 7, **caractérisé en ce que** les éléments isolants (14, 18, 24, 27, 32) sont de forme annulaire.

9. Raccord (2) selon l'une des revendications 1 à 8, **caractérisé en ce qu'**au moins une gorge (8, 10, 23) est ménagée dans la paroi (5) de l'orifice d'introduction (4) pour loger au moins un élément isolant (14, 18, 24, 27, 32).

10. Procédé de vérification du bon sertissage, comportant les étapes consistant à mesurer la conductivité électrique entre deux points délimitant une portion d'une installation comportant des tubes (3) et des raccords (2) conducteurs tels que décrits dans l'une des revendications 1 à 9, et à :
- conclure à un bon sertissage sur cette portion si la conductivité est présente, ou
- recommencer la mesure sur des sous portions de la portion précédente en absence de conductivité entre ces deux points, jusqu' à une portion ne contenant qu'un seul raccord (2) non serti, les raccords (2) non sertis étant ainsi isolés.
